(19) Europäisches Patentamt
European Patent Office
Office européen des brevets

(11) Veröffentlichungsnummer: 0 230 209
A2

(12) **EUROPÄISCHE PATENTANMELDUNG**

(21) Anmeldenummer: **86810580.0**

(22) Anmeldetag: **10.12.86**

(51) Int. Cl.[4]: **A 01 N 59/26**
//
(A01N59/26, 53:00, 43:80, 43:76, 43:08, 37:46)

(30) Priorität: **16.12.85 CH 5406/85**

(43) Veröffentlichungstag der Anmeldung: **29.07.87**
**Patentblatt 87/31**

(84) Benannte Vertragsstaaten: **AT BE CH DE ES FR GB GR IT LI LU NL SE**

(71) Anmelder: **CIBA-GEIGY AG, Klybeckstrasse 141, CH-4002 Basel (CH)**

(72) Erfinder: **Staub, Theodor, Dr., Rheintalweg 90, CH-4125 Riehen (CH)**
Erfinder: **Williams, Robert J., Dr., Baselstrasse 12, CH-4124 Schönenbuch (CH)**
Erfinder: **Margot, Paul, Sallsmattenweg 20, CH-4105 Biel-Benken (CH)**

(54) **Mikrobizide.**

(57) Ein pflanzenmikrobizides Mittel bestehend aus mindestens einem mikrobiziden Acylanilin-Derivat (wie Metalaxyl, Furalaxyl u.a.) und aus $H_3PO_3$ oder einem ihrer Salze entfaltet eine synergistisch gesteigerte Aktivität gegen Pflanzenkrankheiten, besonders auch gegen acylanilin-resistente Erreger. Wahlweise kann ein dritter, protektiv wirkender Fungizid-Partner eingesetzt werden. Die drei Wirkstoffkomponenten können nacheinander in beliebiger Reihenfolge oder gleichzeitig eingesetzt werden.

EP 0 230 209 A2

CIBA-GEIGY AG
Basel (Schweiz)

5-15678/=

Mikrobizide

Die vorliegende Erfindung betrifft mikrobizide Gemische mit synergistisch gesteigerter Wirkung gegen Pflanzenkrankheiten und Verfahren zur Anwendung solcher Gemische.

In den letzten Jahren ist die Entwicklung von Päparaten vorangetrieben worden, die in der Lage sind, Oomyceten, insbesondere die falschen Mehltau-Arten (Peronosporales) wirksam zu bekämpfen und den Befall im Ansatz zu verhüten. Die auffälligste chemische Gruppe wirksamer Präparate entstammt den fungiziden Acylanilinen (Wirkstoffgruppe I). Sie haben den grossen Vorteil, systemische Wirkung zu entfalten. Durch ihr Eindringungsvermögen in den Zellbereich der Pflanzen und in deren Saftstrom vermögen sie diese in allen Teilen gegen Pilzbefall zu schützen oder bei bereits eingetretenem Befall die Ausbreitung des Pilzwachstums zu verhindern.

Durch die ausserordentlich intensive Anwendung im Laufe der letzten zehn Jahre sind gegen die Acylaniline jedoch unerwartet schnell Resistenzen aufgetreten.

Man hat deswegen auf seit Jahren bewährte protektiv wirkende Fungizide zurückgegriffen, um im Gemisch mit diesen oder durch alternierende Applikation die Entwicklung von Acylanilin-Resistenzen zu verlangsamen oder, soweit sie in bestimmten Kulturen noch nicht aufgetreten waren, zu verhindern.

Als protektiv wirkende Mischungs- oder Anwendungspartner für Acylaniline der Wirkstoffgruppe I wurden vorgeschlagen oder befinden sich im Handel

Cu-Salze (z.B. $CuSO_4$, Cu(II)-Chlorid bzw.
Cu(II)-Oxychlorid),
Zink-Ethylenbisdithiocarbamat (Zineb),
Mangan(II)-Ethylenbisdithiocarbamat (Maneb),
Polymeres Zink-Propylenbisdithiocarbamat (Propineb),
Mangan(II)-Zink-Ethylenbisdithiocarbamat (Mancozeb),
N-(Trichlormethansulfenyl)-phthalimid (Folpet),
N-(Trichlormethansulfenyl)-cyclohexen(1)-1,2-dicarboximid (Captan),
N-(1,1,2,2-Tetrachlorethansulfenyl)-cyclohexen(1)-1,2-dicarboximid (Captafol),
2,4,5,6-Tetrachlorisophthalonitril (Chlorothalonil),
2,3-Dicyano-1,4-dithia-anthrachinon (Dithianon),
N-Dichlorofluoromethylthio-N',N'-dimethyl-N-phenylsulphamid (Dichlofluanid),
1,4-Dichlor-2,5-dimethoxybenzol (Chloroneb),
3-Hydroxy-5-methylisoxazol (Hymexazol).

Diese und weitere protektiv wirkende Blattfungizide sind für den Fachmann als Mischungspartner naheliegend. Unter "Cu-Salzen" sind alle Kupfersalze zu verstehen, die im Rebbau üblicherweise in "Bordeaux-Mischungen" eingesetzt werden.

Die vorliegende Erfindung löst das Problem der Resistenzüberwindung und der wirksamen Oomyceten-Bekämpfung sowie der Bekämpfung weiterer Pflanzenkrankheiten auf andere Art und Weise.

Gegenstand der vorliegenden Erfindung ist ein Wirkstoffgemisch, bestehend aus einem Acylanilin der Wirkstoffgruppe I

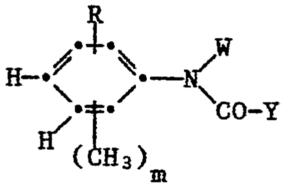

(I)

worin

R Methyl, Chlor, Nitro oder Azido($N_3$) bedeutet,

W die α-Propionsäuremethylester-Gruppe $-CH(CH_3)COOCH_3$ oder den heterocyclischen Ring 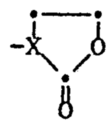 darstellt,

in dem X entweder CH oder N bedeutet,

Y für eine der Gruppen

$-CH_2-O-CH_3$ (Methoxymethyl),

$-CH_2Cl$ (Chlormethyl),

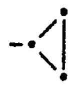 (Cyclopropyl),

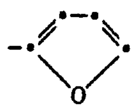 (2-Furyl),

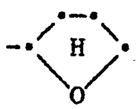 (2-Tetrahydrofuryl),

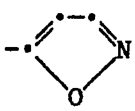 (Isoxazolyl) oder

$-CH_2-C_6H_5$ (Benzyl) steht, und

m einen Index 1 oder 2 bedeutet, oder im Falle, dass R ein zur Aminogruppe meta-ständiges Chlor und gleichzeitig W einen Butyrolacton-Ring (X = CH) darstellen, auch den Index 0 bedeuten kann,

und weiterhin einem Fungizid der Wirkstoffgruppe II, die aus phosphoriger Säure, $H_3PO_3$, oder einem ihrer Alkali-, Erdalkali- oder unsubstituierten oder substituierten Ammonium-Salze, oder dem Zink-, Kupfer-, Nickel- oder Mangansalz besteht.

In der Formel I kann der Substituent R in der 2-, der 3- oder der 6-Position des Phenylrings stehen. Soweit verfügbar, kann auch die vorgegebene $CH_3$-Gruppe eine oder zwei dieser 3 Positionen einnehmen. Ein $NO_2$-Substituent steht vorteilhafterweise in der 3-Position, sofern W eine α-Propionsäuremethylester-Gruppe bedeutet.

Als Alkalisalze der phosphorigen Säure sind alle einbasigen oder zweibasigen Salze $MeH_2PO_3$ oder $Me_2HPO_3$ zu verstehen, worin Me Lithium, Natrium oder Kalium oder auch Mischsalze aus diesen drei Ionen darstellt. Als Ammoniumsalze sind die vorstehend genannten Phosphite zu verstehen, worin Me entweder $NH_4^+$ oder ein durch ein bis vier aliphatische und/oder aromatische Reste substituiertes $NH_4^+$-Kation bedeutet, z.B. $[NH_3-C_2H_5]^+$, $[N(CH_3)_4]^+$, $[N(CH_3)_3Ph]^+$, $[NH_2CH_3(C_6H_4Cl)]^+$, $[NH_2(isoC_3H_7)_2]^+$ usw. Me kann auch für Mischsalze aus Alkali- und Ammonium-Salzen bestehen.

Als Erdalkalisalze der phosphorigen Säure sind sinngemäss Phosphite zu verstehen, die als Kation Calcium, Magnesium, Barium oder Strontium enthalten und die untereinander oder mit Alkali- oder Ammonium-Kationen Mischsalze bilden können.

Phosphorige Säure und ihre Salze wurden bereits 1975 (z.B. DE-24 53 401 oder FR-2 252 056) zur Bekämpfung von Pilzerkrankungen im Pflanzenschutz vorgeschlagen, wurden aber in der Praxis bisher nicht angewendet. Dies dürfte in erster Linie der Phytotoxizität zuzuschreiben sein, mit der $H_3PO_3$ behaftet ist und die auch bei ihren Salzen beobachtet wird. Bei den zur wirksamen Bekämpfung von Pflanzenkrankheiten notwendigen Aufwandmengen von 200-500 g/hl in Spritzbrühen, wie sie für eine wirklich nachhaltige Reduktion des Pilzbefalls auf weniger als 5 % notwendig sind, tritt bei den meisten Kulturpflanzen eine nicht akzeptable Schädigung ein, die die Pflanze im Wachstum in der Entwicklung mindestens behindern, wenn nicht gar in Teilbereichen zum Absterben bringen (z.B. durch Blattnekrose).

Es ist daher als ausgesprochen überraschend anzusehen,dass $H_3PO_3$ und ihre Salze, also die oben genannte Wirkstoffgruppe II, im Zusammenwirken mit Fungiziden der Stoffgruppe I der Acylaniline drei für die Praxis sehr günstige Effekte entfalten. Zum einen wird die fungizide Aktivität eines Gemischs von einem Präparat der Wirkstoffgruppe I mit einem Präparat der Wirkstoffgruppe II synergistisch gesteigert, d.h. zur Erzielung einer bestimmten Reduktion des Krankheitsbefalls

wird eine wesentlich geringere Gesamt-Wirkstoffmenge benötigt. Zweitens wird bei Gesamtwirkstoffmengen von 250 g AS/hl oder weniger keine Phytotoxizität an Kulturpflanzen, besonders an den als empfindlich bekannten Weinreben, beobachtet. Dieser Effekt ist zum Teil auf die Verminderung des Mengenanteils an $H_3PO_3$ oder einem ihrer Salze zurückzuführen, erklärt aber nicht vollständig, weshalb im üblichen Aufwandmengen-Bereich von 100 g - 2000 g AS/ha überhaupt keine Phytotoxizität beobachtet wird. Drittens werden von einer solchen Wirkstoffmischung auch Krankheitsstämme voll bekämpft, die gegen Acylaniline der Formel I Resistenzen zeigen.

Die vorliegende Erfindung stellt daher eine ganz wesentliche Bereicherung der Technik dar.

Bevorzugte Vertreter in der Wirkstoffgruppe der Formel I sind folgende, mehrheitlich im Handel befindliche Verbindungen:

1) Methyl N-(2,6-dimethylphenyl)-N-(2-methoxyacetyl)-DL-alaninat (= Metalaxyl),
2) Methyl N-(2,6-dimethylphenyl)-N-furoyl(2)-DL-alaninat (= Furalaxyl),
3) Methyl N-(2-methyl-6-azidophenyl)-N-(2-methoxyacetyl)-DL-alaninat,
4) Methyl N-(2,3,6-trimethylphenyl)-N-(2-methoxyacetyl)-DL-alaninat,
5) Methyl N-(2,6-dimethylphenyl)-N-(phenylacetyl)-DL-alaninat (= Benalaxyl);
6) α-[N-(3-chlorphenyl)cyclopropancarboxamido]-γ-butyrolacton (= Cyprofuram),
7) α-[N-(2,6-dimethylphenyl)chlormethylcarboxamido]-γ-butyrolacton (= Ofurace),
8) α-[N-(2,6-dimethylphenyl)methoxymethylcarboxamido]-γ-butyrolacton,
9) α-[N-(2,3,6-trimethylphenyl)methoxymethylcarboxamido]-γ-butyrolacton,

10) α-[N-(2,6-dimethyl-3-chlorphenyl)methoxymethylcarboxamido]-γ-butyrolacton,

11) 2-Methoxy-N-(2-oxo-1,3-oxazolidin-3-yl)-acet-2',6'-xylidin (= Oxadixyl).

Die mit allgemeinen Namen versehenen Fungizid-Präparate sind dem Fachmann aus der Literatur geläufig. Verbindung Nr. 3 ist aus der EP-PS 65 483 und Verbindung Nr. 4 aus der US-PS 4,151,299 bekannt geworden. Die Verbindungen Nr. 8), 9) und 10) werden in der GB-PS 1,577,702 beschrieben.

Bevorzugte Vertreter der Wirkstoffgruppe II sind a) die phosphorige Säure selbst sowie die Salze

b) $NaH_2PO_3$, Mononatriumphosphit,
c) $K_2HPO_3$, Monokaliumphosphit,
d) $Na_2HPO_3$, Dinatriumphosphit,
e) $K_2HPO_3$, Dikaliumphosphit
f) $(NH_4)H_2PO_3$, Monoammoniumphosphit,
g) $Ca(H_2PO_3)_2$, einbas. Calciumphosphit,
h) $CaHPO_3$, zweibas. Calciumphosphit,
i) $Ba(H_2PO_3)_2$, einbas. Bariumphosphit,
j) $BaHPO_3$, zweibas. Bariumphosphit,
k) $MgHPO_3$, zweibas. Magnesiumphosphit.
l) $ZnHPO_3$, zweibas. Zinkphosphit,
m) $Cu_2HPO_3$, zweibas. Kupfer(I)phosphit,
n) $CuHPO_3$, zweibas. Kupfer(II)phosphit,
o) $NiHPO_3$, zweibas. Nickelphosphit,
p) $MnHPO_3$, Manganphosphit.

Die vorstehenden Salze kristallisieren in der Regel mit einem oder mehreren Molen Wasser. Sofern man wässrige Spritzbrühen oder andere wasserhaltige Formulierungen für die erfindungsgemässen Wirkstoffgemische verwendet, liegen die Salze dissoziiert mit einem Phosphit-Ion $H[HPO_3]^-$ oder $[HPO_3]^{2-}$ vor. Die Erdalkali-Kationen können hydratisiert sein. Die Wahl eines Salzes der Wirkstoffgruppe II hängt für die praktische Herstellung von fungiziden Mischungspräparaten davon ab, wieweit das in Frage kommende Phosphit-Ion für den Fungizid-Einsatz an der Pflanze oder an ihren Pflanzenteilen verfügbar gemacht werden kann. Wegen ihrer Wasserlöslichkeit sind $H_3PO_3$ sowie die erstgenannten Salze b) bis h) bevorzugt. Ba- und die anderen Metallsalze k) bis p) sowie substituierte Ammoniumsalze geringer Wasserlöslichkeit sind dann bevorzugt, wenn starke Abwaschungen oder Auswaschungen durch z.B. Regenfälle vermieden werden sollen. Besonders geeignete Mischungspartner sind die Kupferphosphite m) und n).

Günstige Mischungsverhältnisse der beiden Wirkstoffgruppen sind
I:II = 1:100 bis 1:1, bevorzugt
I:II = 1:25 bis 1:1.

Besonders bevorzugte Bereiche sind je nach Anwendungspartner I:II = 1:8 bis 2:3, z.B. I:II = 1:7 oder auch I:II = 1:4. Die letztgenannten drei Bereiche sind insbesondere für die stärker wirksamen Acylaniline vorteilhaft, zu denen die Verbindungen Nr. 1), 3), 4), 8), 9) und 10) gehören. Gleichgültig aber, ob im Einzelfalle stärker oder schwächer wirkend, die Acylaniline der Formel I die in biologischen Publikationen häufig auch als "Acylalanin-Fungizide" auf Grund ihrer einheitlichen und dem bekanntesten Vertreter "Metalaxyl" ähnlichen Wirkungsweise klassifiziert werden, unterliegen der tendenziell gleichen Wirkungspotenzierung in Gegenwart von $H_3PO_3$ oder einem ihrer Salze der Formel II.

Zu den Kombinationen, die in der Anwendungspraxis bevorzugt sind, gehören die Gruppen um die namentlich bekannten Handelspräparate Metalaxyl, Furalaxyl, Benalaxyl, Cyprofuram, Ofurace und Oxadixyl sowie um die Wirkstoffe Nr. 9) und Nr. 10). Praxis-Beispiele sind Kombinationen aus diesen mit $H_3PO_3$, $Na_2HPO_3$, Cu-Phosphit oder Ca-Phosphit, z.B. $Ca(H_2PO_3)_2 \cdot H_2O$. Letzteres kann vorteilhaft auch als Anhydrid eingesetzt werden und wird dann weniger rasch bei feuchter Witterung abgewaschen.

Die erfindungsgemässen Wirkstoffmischungen I+II besitzen sehr vorteilhafte kurative, präventive und systemische Fungizid-Eigenschaften zum Schutz von Kulturpflanzen. Mit den vorliegenden Wirkstoffmischungen können an Pflanzen oder an Pflanzenteilen (Früchte, Blüten, Laubwerk, Stengel, Knollen, Wurzeln) von unterschiedlichen Nutzkulturen die auftretenden Mikroorganismen eingedämmt oder vernichtet werden, wobei auch später zuwachsende Pflanzenteile von derartigen Mikroorganismen verschont bleiben. Dies trifft insbesondere auch auf Mikroorganismen zu, die gegen die sogenannten "Acylalanin-Fungizide" Resistenzen entwickelt haben.

Die Wirkstoff-Gemische sind gegen die den folgenden Klassen angehörenden phytopathogenen Pilze wirksam: Ascomyceten (z.B. Venturia, Podosphaera, Erysiphe, Monilinia, Uncinula); Basidiomyceten (z.B. die Gattungen Hemileia, Rhizoctonia, Puccinia); Fungi imperfecti (z.B. Botrytis, Helminthosporium, Fusarium, Septoria, Cercospora, Alternaria und insbesondere Pyricularia). Die Wirkstoffgemische wirken systemisch. Sie können auch als Beizmittel zur Behandlung von Saatgut (Früchte, Knollen, Körner) und Pflanzenstecklingen zum Schutz vor Pilzinfektionen sowie gegen im Erdboden auftretende phytopathogene Pilze eingesetzt werden. Die erfindungsgemässen Wirkstoff-Gemische zeichnen sich durch besonders gute Pflanzenverträglichkeit und durch ihre Umweltfreundlichkeit aus. Phosphorige Säure und ihre Salze werden im Laufe der Zeit in Phosphate umgewandelt und dienen dementsprechend bei Erdboden-Applikationen später als Düngemittel. Acylaniline der Formel I, insbesondere die Verbindungen Nr. 1) bis 4) und 8) bis 10) werden abgebaut und sind bereits nach einer Anbausaison nicht mehr im Boden nachweisbar.

Als Zielkulturen für die hierin offenbarten Indikationsgebiete gelten im Rahmen dieser Erfindung z.B. folgende Pflanzenarten: Getreide: (Weizen, Gerste, Roggen, Hafer, Reis, Sorghum und Verwandte); Rüben: (Zucker- und Futterrüben); Kern-, Stein- und Beerenobst: (Aepfel, Birnen, Pflaumen, Pfirsiche, Mandeln, Kirschen, Erd-, Him- und Brombeeren); Hülsenfrüchte: (Bohnen, Linsen, Erbsen, Soja); Oelkulturen: (Raps, Senf, Mohn, Oliven, Sonnenblumen, Kokos,

Rizinus, Kakao, Erdnüsse); Gurkengewächse: (Kürbis, Gurken, Melonen); Fasergewächse: (Baumwolle, Flachs, Hanf, Jute); Citrusfrüchte: (Orangen, Zitronen, Grapefruit, Mandarinen); Gemüsesorten: (Spinat, Kopfsalat, Spargel, Kohlarten, Möhren, Zwiebeln, Tomaten, Kartoffeln, Paprika); Lorbeergewächse: (Avocado, Cinnamonum, Kampfer) oder Pflanzen wie Mais, Tabak, Nüsse, Kaffee, Zuckerrohr, Tee, Weinreben, Hopfen, Bananen- und Naturkautschukgewächse sowie Zierpflanzen (Blumen, Sträucher, Laubbäume und Nadelbäume wie Koniferen). Diese Aufzählung stellt keine Limitierung dar.

Die Wirkstoff-Gemische der Formeln I und IIwerden üblicherweise in Form von Zusammensetzungen verwendet. Die Wirkstoffe der Formel I und die der Formel II können gleichzeitig, können aber auch nacheinander auf die zu behandelnde Fläche oder Pflanze gegeben werden, zusammen mit gegebenenfalls weiteren in der Formulierungstechnik üblichen Trägerstoffen, Tensiden oder anderen applikationsfördernden Zusätzen.

Geeignete Träger und Zusätze können fest oder flüssig sein und entsprechen den in der Formulierungstechnik zweckdienlichen Stoffen, wie z.B. natürlichen oder regenerierten mineralischen Stoffen, Lösungs-, Dispergier-, Netz-, Haft-, Verdickungs-, Binde- oder Düngemitteln.

Ein bevorzugtes Verfahren zum Aufbringen eines Wirkstoff-Gemisches das mindestens je einen dieser Wirkstoffe I und II enthält, ist das Aufbringen auf die oberirdischen Pflanzenteile, vor allem das Blattwerk (Blattapplikation). Anzahl der Applikationen und Aufwandmenge richten sich nach den biologischen und klimatischen Lebensbedingungen für den Erreger. Die Wirkstoffe können aber auch über den Erdboden durch das Wurzelwerk in die Pflanze gelangen (systemische Wirkung), indem man den Standort der Pflanze mit einer flüssigen Zubereitung tränkt oder die Substanzen in fester Form in den Boden einbringt z.B. in Form von Granulat (Bodenapplikation). Die Verbindungen der Formeln I und II können auch auf Samenkörner aufgebracht werden (Coating), indem man die Körner entweder nacheinander

in einer flüssigen Zubereitung eines Wirkstoffs tränkt oder sie mit einer bereits kombinierten Zubereitung beschichtet. Darüberhinaus sind in besonderen Fällen weitere Applikationsarten bei Pflanzen möglich, z.B. die gezielte Behandlung der Knospen oder der Fruchtstände.

Die Verbindungen der Kombination werden dabei in unveränderter Form oder vorzugsweise zusammen mit den in der Formulierungstechnik üblichen Hilfsmittel eingesetzt und werden daher z.B. zu Emulsionskonzentraten, streichfähigen Pasten, direkt versprühbaren oder verdünnbaren Lösungen, verdünnten Emulsionen, Spritzpulvern, löslichen Pulvern, Stäubemitteln, Granulaten, durch Verkapselungen in z.B. polymeren Stoffen in bekannter Weise verarbeitet. Die Anwendungsverfahren wie Versprühen, Vernebeln, Verstäuben, Verstreuen, Bestreichen oder Giessen werden gleich wie die Art der Mittel den angestrebten Zielen und den gegebenen Verhältnissen entsprechend gewählt. Günstige Aufwandmengen liegen im allgemeinen bei 100 g bis 2 kg AS/ha, insbesondere bei 100 g bis 600 g AS/ha.

Die Formulierungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Ether und Ester, wie Ethanol, Ethylenglykol, Ethylenglykolmonomethyl- oder Ethylether, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle wie epoxydiertes Kokosnussöl oder Sojaöl; oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden. Besonders vorteilhafte, applikationsfördernde Zuschlagstoffe, die zu einer Reduktion der Aufwandmenge führen können, sind ferner natürliche (tierische oder pflanzliche) oder synthetische Phospholipide aus der Reihe der Kephaline und Lecithine, wie z.B. Phosphatidylethanolamin, Phosphatidylserin, Phosphatidylglycerin, Lysolecithin, Plasmalogene oder Cardiolipin, die man beispielsweise aus tierischen oder pflanzlichen Zellen, insbesondere aus Hirn, Herz, Leber, Eidotter oder Sojabohnen gewinnen kann. Verwendbare Handelsmischungen sind z.B. Phosphatidylchlorin-Mischungen. Synthetische Phospholipide sind z.B. Dioctanoylphosphatidylcholin und Dipalmitoylphosphatidylcholin.

Als oberflächenaktive Verbindungen kommen je nach Art der zu formulierenden Wirkstoffe der Formel I nichtionogene, kation- und/oder anionaktive Tenside mit guten Emulgier-, Dispergier- und Netzeigenschaften in Betracht. Unter Tensiden sind auch Tensidgemische zu verstehen.

Darüber hinaus schliesst die vorliegende Erfindung auch Verfahren zur Behandlung von Pflanzenkrankheiten ein, die sich durch Applikation der Verbindungen der Formel I und II bzw. der neuen Mittel auf die durch Infektion befallene oder gefährdete Stelle auszeichnen. Die Applikation der beiden Wirkstofftypen I und II kann in beliebiger Reihenfolge oder gleichzeitig erfolgen.

Im folgenden bedeutet "Wirkstoff" ein Gemisch aus einem Acylanilin der Wirkstoffgruppe I mit $H_3PO_3$ (oder einem Salz) der Wirkstoffgruppe II im Verhältnis 1:8 bis 2:3. (% = Gewichtsprozent).

Im Falle des Metalaxyl, Furalaxyl, Ofurace und Oxadixyl werden als günstige Gewichtsverhältnisse I:II (bezogen auf $H_3PO_3$) 1:7; 1:5; 1:3; 3:5; 2:5 und 2:3 angesehen.

| <u>Spritzpulver</u> | a) | b) | c) |
|---|---|---|---|
| Wirkstoff | 25 % | 50 % | 75 % |
| Na-Ligninsulfonat | 5 % | 5 % | |
| Na-Laurylsulfat | 3 % | - | 5 % |
| Na-Diisobutylnaphthalinsulfonat | - | 6 % | 10 % |
| Octylphenolpolyethylenglykolether (7-8 Mol Ethylenoxid) | - | 2 % | - |
| Hochdisperse Kieselsäure | 5 % | 10 % | 10 % |
| Kaolin | 62 % | 27 % | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| <u>Emulsions-Konzentrat</u> | |
|---|---|
| Wirkstoff | 10 % |
| Octylphenolpolyethylenglykolether (4-5 Mol Ethylenoxid) | 3 % |
| Ca-Dodecylbenzolsulfonat | 3 % |
| Ricinusölpolyglykolether (35 Mol Ethylenoxid) | 4 % |
| Cyclohexanon | 30 % |
| Xylolgemisch | 50 % |

Aus diesem Konzentrat können durch Verdünnen mit Wasser Emulsionen jeder gewünschten Konzentration hergestellt werden.

| Stäubemittel | a) | b) |
|---|---|---|
| Wirkstoff | 5 % | 8 % |
| Talkum | 95 % | - |
| Kaolin | - | 92 % |

Man erhält anwendungsfertige Stäubemittel, indem der Wirkstoff mit den Träger vermischt und auf einer geeigneten Mühle vermahlen wird.

| Extruder Granulat | |
|---|---|
| Wirkstoff | 10 % |
| Na-Ligninsulfonat | 2 % |
| Carboxymethylcellulose | 1 % |
| Kaolin | 87 % |

Der Wirkstoff wird mit den Zusatzstoffen vermischt, vermahlen und mit Wasser angefeuchtet. Dieses Gemisch wird extrudiert und anschliessend im Luftstrom getrocknet.

| Umhüllungs-Granulat | |
|---|---|
| Wirkstoff | 3 % |
| Polyethylenglykol (MG 200) | 3 % |
| Kaolin | 94 % |

(MG = Molekulargewicht)

Der fein gemahlene Wirkstoff wird in einem Mischer auf das mit Polyethylenglykol angefeuchtete Kaolin gleichmässig aufgetragen. Auf diese Weise erhält man staubfreie Umhüllungs-Granulate.

## Biologische Beispiele

### A) Wirkung gegen Plasmopara viticola ("acylanilin-resistent") auf Weinreben

#### Residual-protektive Wirkung

Im 6-8 Blattstadium werden Rebenstecklinge mit einer aus Spritzpulver des Wirkstoffes hergestellten Spritzbrühe besprüht. Nach 24 Stunden werden die behandelten Pflanzen mit einer Sporangien-suspension eines Pilzstammes infiziert, der gegen Metalaxyl, Ofurace und Oxadixyl abgeschwächte Sensitivität besitzt. Nach einer Inkubation während 6 Tagen bei 95-100 % relativer Luftfeuchtigkeit und 20°C wird der Pilzbefall beurteilt.

| Wirkstoff | Spritzbrühe Gew.-% | Anteil I:II | Pilzbefall 7. Tag |
|---|---|---|---|
| Metalaxyl<br>$Na_2HPO_3$ | 0,006<br>0,042 | 1:7 | kein sichtbarer Befall |
| Metalaxyl<br>$Na_2HPO_3$ | 0,0015<br>0,0375 | 1:25 | kein sichtbarer Befall |
| Metalaxyl<br>$H_3PO_3$ | 0,005<br>0,02 | 1:4 | 0-5 % |
| Ofurace<br>$Na_2HPO_3$ | 0,005<br>0,015 | 1:3 | 5-10 % |
| Oxadixyl<br>$Na_2HPO_3$ | 0,005<br>0,015 | 1:3 | 5-10 % |
| Metalaxyl | 0,02 | — | 30-50 % |
| Ofurace | 0,02 | — | > 50 % |
| Oxadixyl | 0,02 | — | > 50 % |
| $Na_2HPO_3$ | 0,02 | — | 10-20 % |

Der Mengenanteil eines Präparats der Wirkstoffgruppe I, d.h. eines Acylanilins, kann teilweise durch einen der einleitend genannten protektiv wirkenden Mischungspartner erhöht werden. Auch solche pflanzenmikrobiziden Mittel, die als dritten Mischungspartner wahlweise Kupfersulfat, Kupfer(oxy)chlorid, Zineb, Maneb, Propineb, Mancozeb, Folpet, Captan, Captafol, Chlorothalonil, Dithianon, Dichlofluanid, Chloroneb oder Hymexazol enthalten, sind ein Gegenstand vorliegender Erfindung. Dabei kann der Mengenanteil des dritten Mischungspartners dem bis zu dreifachen Mengenanteil des Acylanilins entsprechen.

Typische Beispiele sind Dreiermischungen auf der Basis von Metalaxyl, z.B. Metalaxyl/Folpet/Phosphit oder Metalaxyl/Dithianon/Phosphit oder Metalaxyl/Chlorothalonil/Phosphit.

B) Unter den vorstehend beschriebenen biologischen Bedingungen der Bekämpfung von Plasmopara viticola auf Weinreben wird mit einer Dreiermischung dieser Art folgendes Ergebnis erzielt. (Anteil Ia+Ib = Anteil I)

| Wirkstoffe | Spritzbrühe Gew.-% | Spritzbrühe Anteil I:II | Pilzbefall 7. Tag |
|---|---|---|---|
| Metalaxyl (Ia)<br>Folpet (Ib)<br>$H_3PO_3$ | 0,002<br>0,004<br>0,015 | 2:5 | kein sichtbarer Befall |

C) <u>Wirkung gegen Plasmopara viticola ("acylanilin-resistent") auf Weinreben</u>

<u>Präventive und kurative Wirkung</u>

Im 4-Blattstadium werden Reben-Stecklinge mit einer Sporangien-Suspension eines Plasmopara-Stammes inokuliert, der gegen Acylanilin-Fungizide wie Metalaxyl, Furalaxyl, Ofurace, Cyprofuram, Oxadixyl (und vergleichbare Vertreter) abgeschwächte Sensitivität besitzt. Einen Tag später, nach Ausbruch der Krankheit, werden die Reben-Stecklinge mit einer aus einem Spritzpulver des Wirkstoffs (oder Wirkstoffgemischs) hergestellten Spritzbrühe besprüht (Versuchsteil zur Bestimmung der kurativen Wirkung).

Zwei Tage und sechs Tage nach der ersten Inokulation findet eine zweite und dritte Inokulation mit der Sporangien-Suspension statt (Versuchsteil zur Bestimmung der präventiven Wirkung).

Während des Versuchs werden 20-22°C und 95-100 % relative Luftfeuchtigkeit aufrechterhalten.

Jede Wirkstoffkonzentration wird in 3 Wiederholungen geprüft.

11 und 15 Tage nach der ersten Inokulation wird ausgewertet. Es ergeben sich folgende überraschende Wirkungssteigerungen bei kombinierter Behandlung der Pflanzen mit einem Gemisch aus einem Acylanilin der Formel I und einem Salz der phosphorigen Säure (AS = Aktivsubstanz). 0 % Wirkung = 100 % Pilzbefall.

| Konzentrationen in ppm AS | | % Wirkung | |
|---|---|---|---|
| $Na_2HPO_3$ | Metalaxyl | nach 11 Tagen | nach 15 Tagen |
| 400 | - | 0 | 0 |
| - | 1000 | 96 | 96 |
| - | 250 | 92 | 92 |
| - | 60 | 72 | 68 |
| - | 15 | 20 | 20 |
| 400 | + 1000 | 100 | 100 |
| 400 | + 250 | 100 | 100 |
| 400 | + 60 | 96 | 92 |
| 400 | + 15 | 88 | 82 |

D) Wirkung gegen Plasmopara viticola ("acylanilin-resistent") auf Weinreben

Präventive und kurative Wirkung

In einem zu C gleichartigen Versuch mit einem eher acylanilinsensitiven Stamm von Plasmopara viticola werden als Wirksotffe Metalaxyl und $H_3PO_3$ geprüft. Auswertung: 8 Tage nach erster Inokulation.

| Konzentrationen in ppm AS | | % Wirkung |
|---|---|---|
| $H_3PO_3$ | Metalaxyl | nach 8 Tagen Inkubation |
| 2000 | - | 86 |
| 600 | - | 33 |
| - | 60 | 100 |
| - | 20 | 60 |
| 2000 | + 20 | 100 |
| 600 | + 60 | 100 |
| 600 | + 20 | 100 |

Patentansprüche

1. Pflanzenmikrobizides Mittel aus mindestens zwei Wirkstoff-Komponenten, wovon eine ein mikrobizides Acylanilin-Derivat ist, dadurch gekennzeichnet, dass das Acylanilin-Derivat einer Verbindung der Formel I entspricht

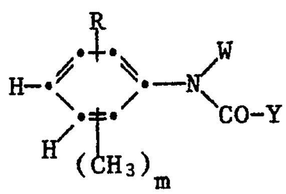

(I)

worin

R Methyl, Chlor, Nitro oder Azido($N_3$) bedeutet,

W die α-Propionsäuremethylester-Gruppe $-CH(CH_3)COOCH_3$ oder den heterocyclischen Ring 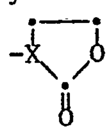 darstellt,

in dem X entweder CH oder N bedeutet,

Y für eine der Gruppen

$-CH_2-O-CH_3$ (Methoxymethyl),

$-CH_2Cl$ (Chlormethyl),

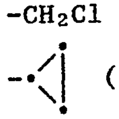 (Cyclopropyl),

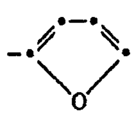 (2-Furyl),

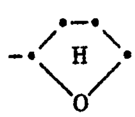 (2-Tetrahydrofuryl),

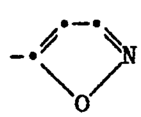 (Isoxazolyl) oder

$-CH_2-C_6H_5$ (Benzyl) steht, und

m einen Index 1 oder 2 bedeutet, oder im Falle, dass R ein zur Aminogruppe meta-ständiges Chlor und gleichzeitig W einen Butyrolacton-Ring (X = CH) darstellen, auch den Index 0 bedeuten kann,

und dass die zweite Komponente ein Fungizid der Wirkstoffgruppe II bestehend aus phosphoriger Säure (= $H_3PO_3$), oder einem ihrer Alkali-, Erdalkali- oder unsubstituierten oder substituierten Ammoniumsalze, oder ihrem Zink-, Kupfer-, Nickel- oder Mangan-Salz besteht.

2. Mittel gemäss Anspruch 1, dadurch gekennzeichnet, dass das Gewichtsverhältnis I:II = 1:100 bis 1:1 beträgt.

3. Mittel gemäss Anspruch 2, dadurch gekennzeichnet, dass das Gewichtsverhältnis I:II = 1:25 bis 1:1 beträgt.

4. Mittel gemäss Anspruch 3, dadurch gekennzeichnet, dass das Gewichtsverhältnis 1:8 bis 2:3 beträgt.

5. Mittel gemäss Anspruch 1, worin als Wirkstoff der Formel I Metalaxyl, Furalaxyl, Benalaxyl, Cyprofuram, Ofurace, Oxadixyl oder α-[N-(2,3,6-Trimethylphenyl)methoxymethylcarboxamido]-γ-butyrolacton oder α-[N-(2,6-Dimethyl-3-chlorphenyl)-methoxymethylcarboxamido]-γ-butyrolacton verwendet wird.

6. Mittel gemäss Anspruch 1, worin als Wirkstoff der Formel II wahlweise

a) $H_3PO_3$
b) Mononatriumphosphit,
c) Monokaliumphosphit,
d) Dinatriumphosphit,
e) Dikaliumphosphit
f) Monoammoniumphosphit,
g) einbas. Calciumphosphit,
h) zweibas. Calciumphosphit,
i) einbas. Bariumphosphit,
j) zweibas. Bariumphosphit,
k) zweibas. Magnesiumphosphit.
l) zweibas. Zinkphosphit,
m) zweibas. Kupfer(I)phosphit,

n) zweibas. Kupfer(II)phosphit,

o) zweibas. Nickelphosphit oder

p) zweibas. Manganphosphit verwendet wird.

7. Mittel gemäss Anspruch 6 enthaltend als Wirkstoff der Formel II $H_3PO_3$, Dinatriumphosphit, Kupfer-Phosphit oder Calciumphosphit.

8. Mittel gemäss Anspruch 7, wobei die Wirkstoff-Komponente der Formel I Metalaxyl ist.

9. Mittel gemäss Anspruch 7, wobei die Wirkstoff-Komponente der Formel I α-[N-(2,3,6-Trimethylphenyl)methoxymethylcarboxamido]-γ-butyrolacton ist.

10. Mittel gemäss Anspruch 7, wobei die Wirkstoff-Komponente der Formel I α-[N-(2,6-Dimethyl-3-chlorphenyl)methoxymethylcarboxamido]-γ-butyrolacton ist.

11. Mittel gemäss Anspruch 1 enthaltend eine dritte, protektivfungizid wirkende Komponente, dadurch gekennzeichnet, dass diese Komponente Kupfersulfat, Kupfer(oxy)chlorid, Zineb, Maneb, Propineb, Mancozeb, Folpet, Captan, Captafol, Chlorothalonil, Dithianon, Dichlofluanid, Chloroneb oder Hymexazol ist.

12. Mittel gemäss Anspruch 11, dadurch gekennzeichnet, dass die Gewichtsmenge der protektiven Komponente höchstens der bis zu dreifachen Gewichtsmenge an Acylanilin entspricht.

13. Mittel gemäss Anspruch 12, dadurch gekennzeichnet, dass es als Wirkstoff I Metalaxyl enthält.

14. Mittel gemäss Anspruch 13, dadurch gekennzeichnet, dass es als protektive dritte Komponente Captan, Captafol oder Folpet enthält.

15. Mittel gemäss Anspruch 13, dadurch gekennzeichnet, dass es als protektive dritte Komponente Dithianon enthält.

16. Mittel gemäss Anspruch 13, dadurch gekennzeichnet, dass es als protektive dritte Komponente Mancozeb enthält.

17. Verfahren zur Bekämpfung von Pflanzenkrankheiten, dadurch gekennzeichnet, dass man in beliebiger Reihenfolge oder gleichzeitig die durch Infektion befallene oder gefährdete Stelle mindestens mit einem Wirkstoff der Formel I und einem Wirkstoff der Formel II gemäss Anspruch 1 behandelt.

18. Verfahren gemäss Anspruch 17, dadurch gekennzeichnet dass man in beliebiger Reihenfolge oder gleichzeitig mit einem Wirkstoff der Formel I und der Formel II weiterhin einen protektiven dritten Wirkstoff gemäss Anspruch 11 appliziert.

FO 7.5/PK/sm*/cc*